# EUROPÄISCHE PATENTANMELDUNG

(11) **EP 0 805 066 A2**
(43) Veröffentlichungstag der Anmeldung: **05.11.1997**
(21) Anmeldenummer: 97106803.6
(22) Anmeldetag: 24.04.1997
(51) Int. Cl.: B60N 2/28

(54) **Fahrzeugkindersitz**

(30) Priorität: 03.05.1996 DE 29608030 U
(71) Anmelder: TRW Occupant Restraint Systems GmbH, 73551 Alfdorf (DE)
(72) Erfinder: Müller, Albrecht, 73568 Durlangen (DE); Holzapfel, Volker, 66606 St. Wendel (DE)
(74) Vertreter: Kitzhofer, Thomas, Dipl.-Ing.

(57) **Zusammenfassung**

Ein Kindersitz (1) mit einem daran angebrachten Rückhaltegurt, hat einen im Kraftflußweg des Rückhaltegurts angeordneten Kraftbegrenzer mit einem energieverzehrenden Element, so daß im Rückhaltefall die auf ein Kind einwirkenden Kräfte geringer sind als bei herkömmlichen Kindersitzen.

## Beschreibung

Die Erfindung betrifft einen Fahrzeugkindersitz mit einem daran angebrachten Rückhaltegurt.

Bei bislang üblichen Kindersitzen werden die Kinder mittels eines Drei-, Vier- oder Fünf-Punkt-Gurtes, der am Kindersitz befestigt ist, angegurtet, wobei der Kindersitz selbst Üblicherweise mit den im Fahrzeug befindlichen Rückhaltegurten an einem Fahrzeugsitz befestigt wird. Damit ist der Kindersitz fest mit dem Fahrzeug verbunden. Bei einem Fahrzeugaufprall wird das Kind durch seine träge Masse relativ zum Fahrzeug nach vorn bewegt, bis es durch den am Kindersitz vorgesehenen Gurt zurückgehalten wird. Durch die Verlagerung nach vorn und die anschließende abrupte Rückhaltung kommt es zu einer starken Verzögerung des Oberkörpers, während sich der Kopf weiter nach vorn bewegen kann und somit eine Nickbewegung ausführt, die im Nackenwirbelbereich zu lebensgefährlichen Verletzungen führen kann.

Aufgabe der Erfindung ist es deshalb, einen Kindersitz zu schaffen, der das Verletzungsrisiko für ein Kind bei einem Fahrzeugaufprall insbesondere im Brust- und Nackenwirbelbereich herabsetzt.

Diese Aufgabe wird erfindungsgemäß bei einem Kindersitz der eingangs genannten Art dadurch gelöst, daß im Kraftflußweg des Rückhaltegurts ein Kraftbegrenzer mit einem energieverzehrenden Elemente angeordnet ist. Der Kraftbegrenzer sorgt dafür, daß die auf den Oberkörper des Kindes einwirkende Kraft bei der Verzögerung begrenzt wird, indem er mittels des energieverzehrenden Elements Kraftspitzen abbaut. Durch den erfindungsgemäßen Kindersitz wird das Verletzungsrisiko im Brust- und Nackenwirbelbereich erheblich reduziert.

Das energieverzehrende Element ist gemäß einer bevorzugten Ausführungsform durch die Bewegung des Kindes bei einem Fahrzeugaufprall und die dadurch hervorgerufene Zugkraft im Rückhaltegurt plastisch verformbar. Gemäß der bevorzugten Ausführungsform ist das Element ein Torsionsstab.

Vorzugsweise ist der Rückhaltegurt an einer Gurtspule befestigt, in der koaxial zu ihr der Torsionsstab angeordnet ist, der an seinem ersten Ende mit dem Kindersitz und an seinem zweiten Ende mit der Gurtspule verbunden ist. Bei einem Fahrzeugaufprall wird die Gurtspule durch den auf Zug beanspruchten Rückhaltegurt in Drehung versetzt, so daß der drehfest am Kindersitz befestigte Torsionsstab verdrillt wird.

Bei der bevorzugten Ausführungsform erstreckt sich der Rückhaltegurt durch entsprechende Schlitze in der Rückenlehne zu deren Rückseite, wo die Gurtspule gelagert ist. Dabei sind vorteilhafter Weise mehrere Schlitze in unterschiedlicher Höhe in der Rückenlehne zur Anpassung des Rückhaltegurts an die Größe eines Kindes vorgesehen. Auf diese Weise ist eine einfache Gurthöhenverstellung möglich.

Weitere Merkmale und Vorteile der Erfindung ergeben sich aus der folgenden Beschreibung und aus den Zeichnungen, auf die Bezug genommen wird. In den Zeichnungen zeigen:
Fig. 1 in perspektivischer Ansicht von schräg oben den erfindungsgemäßen Kindersitz;
Fig. 2 eine Schnittansicht durch den Kindersitz samt Gurtspule längs der Mittellinie des Torsionsstabs, der in der in Fig. 1 gezeigten Gurtspule eingebaut ist;
Fig. 3 eine Querschnittsansicht der Gurtspule längs der Linie III-III in Fig. 2, wobei der Rückhaltegurt durch einen oberen Schlitz geführt ist; und
Fig. 4 eine Fig. 3 entsprechende Schnittansicht der Gurtspule, wobei der Rückhaltegurt durch einen unteren Schlitz geführt ist.

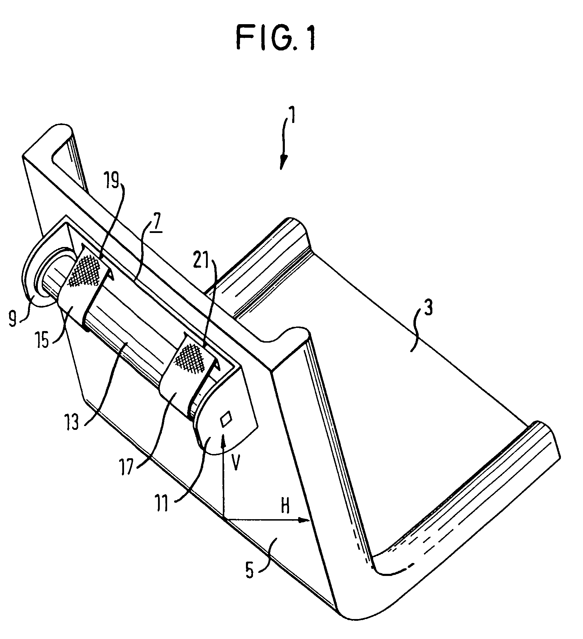

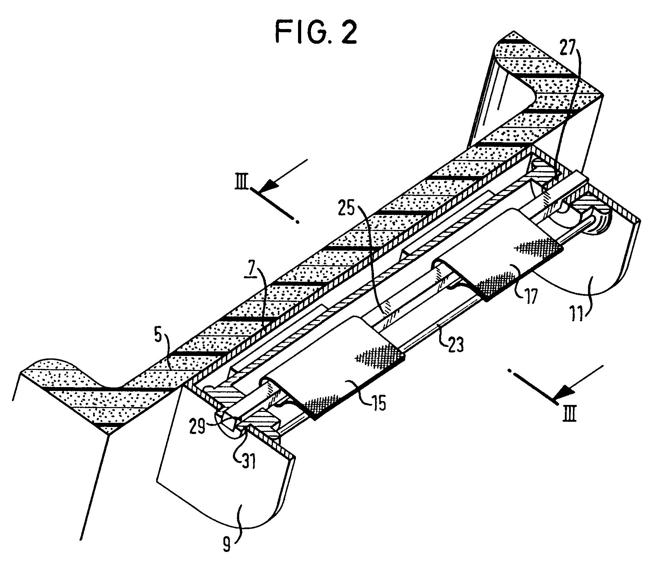

In Fig. 1 ist ein Kindersitz 1 mit einem Sitzteil 3 und einer Rückenlehne 5 dargestellt. An der Rückseite der Rückenlehne 5, an deren oberem Ende, ist ein U-förmiges Aufnahmeteil 7 mit zwei nach hinten vorstehenden Stützen 9 und 11 angeformt, in denen eine sich zwischen den Stützen 9, 11 erstreckende Gurtspule 13 gelagert ist. An der Gurtspule 13 ist ein Rückhaltegurt in Form eines linken und eines rechten Schultergurts 15 bzw. 17 arretiert, indem sich die Schultergurte 15, 17, wie in Fig. 2 gezeigt, durch eine schlitzförmige Öffnung 23 in der Gurtspule 13 in deren Inneres, wo koaxial zur Gurtspule 13 ein Torsionsstab 25 mit rechteckigem Querschnitt angeordnet ist, erstrecken und über entsprechende Schlaufen am Torsionsstab 25 befestigt sind. An einem der Stütze 11 zugeordneten ersten Ende des Torsionsstabs 25 ist dieser in einer rechteckigen Öffnung in einem an der Stütze 11 angeformten buchsenförmigen Fortsatz 27 drehfest gehaltert. Der Fortsatz 27 hat eine zylindrische Außenfläche, an der die Gurtspule 13 mit einer stirnseitigen Öffnung drehbar anliegt. Das der Stütze 9 zugeordnete zweite Ende des Torsionsstabs 25 ist formschlüssig in einer entsprechenden mehreckigen Öffnung 29 in der zugeordneten Stirnseite der Gurtspule 13 arretiert. Die Lagerung der Gurtspule 13 auf dieser Seite besteht aus einem an ihrer Stirnseite angeformten Lagerfortsatz 31, der in einer entsprechenden Öffnung in der Stütze 9 drehbar aufgenommen ist.

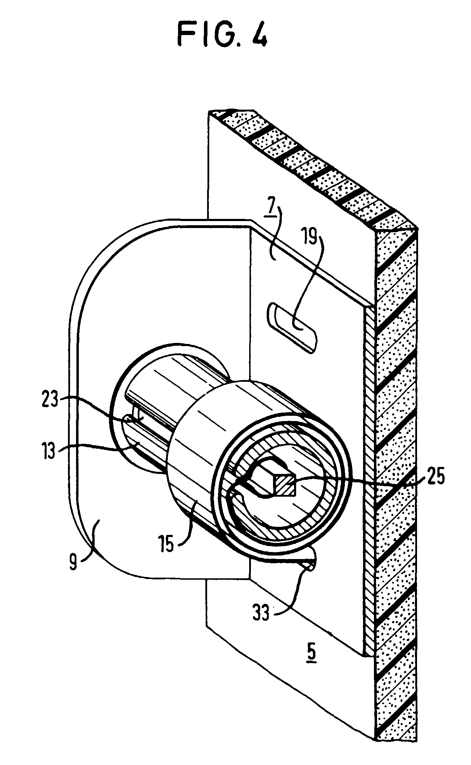

Von der Gurtspule 13 aus, um die sie mehrfach gewickelt sind, erstrecken sich die Schultergurte 15 und 17 weiter durch obere Schlitze 19 bzw. 21 in dem Aufnahmeteil 7 und der Rückenlehne 5 nach vorn. Die Schlitze 19, 21 sind dabei so dimensioniert, daß die Schultergurte 15, 17 mit ihren nicht gezeigten Verschlußenden durch sie hindurchgeführt werden können oder, alternativ bei kleineren Kindern, aus den oberen Schlitzen 19, 21 herausgezogen und durch untere Schlitze, von denen in Fig. 4 nur der Schlitz 33 gezeigt ist, hindurchgeführt werden können.

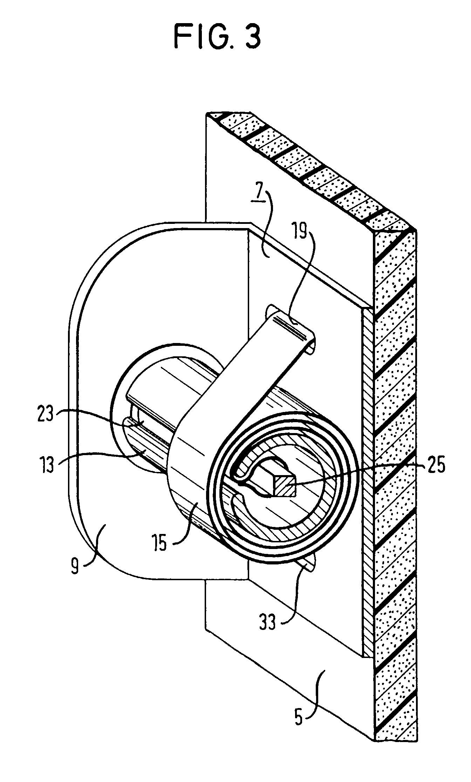

In der in den Figuren 1 bis 4 gezeigten Grundform des Kindersitzes 1 sind die Längen der Schultergurte 15, 17 vor Benutzung des Kindersitzes 1 auf die Größe des Kindes einzustellen, indem das mit einem schnallenartigen Element versehene verschlußseitige Ende (nicht gezeigt) der Schultergurte 15, 17 verstellt wird.

Die Wirkungsweise des Kindersitzes 1 bei einem Fahrzeugfrontalaufprall wird im folgenden anhand der Figuren 1 bis 3 erläutert. Die träge Masse des im Kindersitz 1 angegurteten Kindes sorgt bei einem Fahrzeugfrontalaufprall dafür, daß sich sein Oberkörper relativ zum Kindersitz 1 nach vorn bewegt und die Schultergurte 15, 17 auf Zug belastet werden, weshalb sie bestrebt sind, von der Gurtspule 13 abgerollt zu werden. Dadurch wird die Gurtspule 13 geringfügig in Drehung versetzt. Über den entsprechenden Formschluß mit dem Torsionsstab 25 an dessen zweitem Ende wird ein Torsionsmoment in diesen eingeleitet. Da das erste Ende des Torsionsstabs 25 drehfest gelagert ist, sorgt das Torsionsmoment für eine Verdrillung des Torsionsstabs 25, der elastisch verformt wird. Durch die aufgrund der Verdrillung zugelassene Drehung der Gurtspule 13 können die Schultergurte 15, 17 um eine geringe Strecke abgerollt werden, so daß die Schultergurte 15, 17 während der Rückhaltung kurzzeitig nachgeben, wodurch die auf den Körper wirkende Kraft bei der Rückhaltung begrenzt wird. Es treten damit keine so hohen Beschleunigungswerte im Bereich des Oberkörpers und des Kopfes eines Kindes auf wie bei bislang üblichen Kindersitzen ohne Kraftbegrenzer. Dadurch werden die Scherbelastungen im Nackenwirbelbereich stark herabgesetzt.

Der zuvor beschriebene Kindersitz 1 zeichnet sich durch einen einfachen und kompakten Aufbau aus und kann auch durch Nachrüsten eines bislang üblichen Kindersitzes mit einem zuvor beschriebenen Kraftbegrenzer hergestellt werden.

## Patentansprüche

1. Fahrzeugkindersitz (1) mit einem daran angebrachten Rückhaltegurt, dadurch gekennzeichnet, daß im Kraftflußweg des Rückhaltegurts ein Kraftbegrenzer mit einem energieverzehrenden Element angeordnet ist.

2. Kindersitz (1) nach Anspruch 1, dadurch gekennzeichnet, daß das energieverzehrende Element durch die Bewegung des Kindes bei einem Fahrzeugaufprall und die dadurch hervorgerufene Zugkraft im Rückhaltegurt plastisch verformbar ist.

3. Kindersitz (1) nach Anspruch 1 oder 2, dadurch gekennzeichnet, daß das energieverzehrende Element ein Torsionsstab (25) ist.

4. Kindersitz (1) nach Anspruch 3, dadurch gekennzeichnet, daß der Rückhaltegurt an einer Gurtspule (13) befestigt ist, in der koaxial zu ihr der Torsionsstab (25) angeordnet ist, der an einem ersten Ende mit dem Kindersitz (1) und an seinem gegenüberliegenden, zweiten Ende mit der Gurtspule (13) verbunden ist.

5. Kindersitz (1) nach Anspruch 4, dadurch gekennzeichnet, daß die Gurtspule (13) zwischen zwei rückseitig am oberen Ende der Rückenlehne (5) des Kindersitzes (1) angebrachten Stützen (9, 11) gelagert ist und das erste Ende des Torsionsstabs (25) drehfest mit einer Stütze (11) und das zweite Ende drehfest mit der Gurtspule (13) verbunden ist.

6. Kindersitz (1) nach Anspruch 4 oder 5, dadurch gekennzeichnet, daß sich der Rückhaltegurt durch eine schlitzartige Öffnung (23) in der Gurtspule (13) in deren Inneres erstreckt und am Torsionsstab (25) befestigt ist.

7. Kindersitz (1) nach einem der Ansprüche 4 bis 6, dadurch gekennzeichnet, daß sich der Rückhaltegurt durch entsprechende Schlitze (19, 21; 33) in der Rückenlehne (5) zu deren Rückseite erstreckt, wo die Gurtspule (13) gelagert ist.

8. Kindersitz (1) nach Anspruch 7, dadurch gekennzeichnet, daß mehrere Schlitze (19, 21; 33) in unterschiedlicher Höhe in der Rückenlehne (5) zur Anpassung des Rückhaltegurts an die Größe eines Kindes vorgesehen sind.

9. Kindersitz (1) nach einem der Ansprüche 4 bis 8, dadurch gekennzeichnet, daß der Rückhaltegurt einen linken und einen rechten Schultergurt (15, 17) umfaßt, denen eine gemeinsame Gurtspule (13) zugeordnet ist.
